(19) Europäisches Patentamt
European Patent Office
Office européen des brevets

(11) **EP 4 553 723 A1**

(12) **EUROPEAN PATENT APPLICATION**
published in accordance with Art. 153(4) EPC

(43) Date of publication:
**14.05.2025 Bulletin 2025/20**

(21) Application number: **23835425.2**

(22) Date of filing: **29.06.2023**

(51) International Patent Classification (IPC):
**G06N 99/00** [(2019.01)]

(52) Cooperative Patent Classification (CPC):
**G06N 20/00; G06N 3/044; G06N 5/01; G06N 7/01;
G06N 20/10; G06N 20/20; G06N 99/00**

(86) International application number:
**PCT/JP2023/024237**

(87) International publication number:
**WO 2024/009893 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.07.2022 JP 2022109916**

(71) Applicant: **Resonac Corporation
Tokyo 105-7325 (JP)**

(72) Inventors:
• **SAKAGUCHI, Suguru
Tokyo 105-8518 (JP)**
• **KAKUDA, Kohsuke
Tokyo 105-8518 (JP)**
• **OKUNO, Yoshishige
Tokyo 105-8518 (JP)**

(74) Representative: **Strehl & Partner mbB
Maximilianstrasse 54
80538 München (DE)**

(54) **INFORMATION PROCESSING DEVICE, INFORMATION PROCESSING SYSTEM, PROGRAM, AND ISING MODEL DEVELOPMENT ASSISTANCE METHOD**

(57)    With respect to an information processing device that supports creation of an Ising model for causing an annealing-type optimization machine to solve an optimum solution search problem, the information processing device includes a transforming unit configured to binarize an explanatory variable included in a training data set created using a trained machine learning model; a training unit configured to train an Ising model by performing machine learning with a relationship between the binarized explanatory variable and a predicted value of the training data set; and an output unit configured to output the trained Ising model.

FIG.5

**Description**

TECHNICAL FIELD

The present disclosure relates to an information processing device, an information processing system, a program, and an Ising model creation support method.

BACKGROUND

In the related art, a technique of performing a ground state search by an annealing method using an Ising model or quadratic unconstrained binary optimization (QUBO) to calculate, at high speed, a stable combination of an A site, a B site, and an anion site in a perovskite crystal structure even when combinations are enormous is known (see, for example, Patent Literature 1).

Related Art Document

Patent Document

[Patent Document 1] Japanese Laid-open Patent Application Publication No. 2021-033768

SUMMARY OF THE INVENTION

Problem to be solved by the invention

An annealing-type optimization machine can solve a combinatorial optimization problem formulated by an Ising model, for example. Therefore, by converting, into an Ising model, a problem that a user wants to solve, the user can cause the annealing-type optimization machine to solve the problem.
However, there is a problem that the user cannot cause the annealing-type optimization machine to solve a problem that cannot be converted into an Ising model. Additionally, there is a problem in that it requires time and effort for a user to formulate a problem to be solved with an Ising model.
An object of the present disclosure is to provide an information processing device, an information processing system, a program, and an Ising model creation support method that can support creation of an Ising model for causing an annealing-type optimization machine to solve an optimum solution search problem.

Means for Solving Problem

The present disclosure includes the following configurations.

[1] An information processing device that supports creation of an Ising model for causing an annealing-type optimization machine to solve an optimum solution search problem, the information processing device including:

a transforming unit configured to binarize an explanatory variable included in a training data set created using a trained machine learning model;
a training unit configured to train an Ising model by performing machine learning with a relationship between the binarized explanatory variable and a predicted value of the training data set; and
an output unit configured to output the trained Ising model.

[2] The information processing device as described in [1], wherein the training unit is configured to train an Ising mathematical model that becomes equivalent to the Ising model by limiting an input to binary data, by performing the machine learning with the relationship between the binarized explanatory variable and the predicted value of the training data set.
[3] The information processing device as described in [1] or [2], further comprising an input information creating unit configured to create input information for the annealing-type optimization machine, the input information including a parameter of the trained Ising model and a constraint condition.
[4] The information processing device as described in [2], wherein the Ising mathematical model is a factorization machines (FM) model, a field-aware factorization machines (FFM) model, or a general linear model.
[5] The information processing device as described in any one of [1] to [4], wherein the trained machine learning model is any one algorithm selected from the group consisting of a linear regression model, a random forest model, a Gaussian process model, and a neural network model, or an ensemble model of a combination thereof.

[6] The information processing device as described in any one of [1] to [5], further comprising a training data set creating unit configured to create the training data set by using the trained machine learning model that is trained with experimental data.

[7] An information processing system including an annealing-type optimization machine; and an information processing device that supports creation of an Ising model for causing the annealing-type optimization machine to solve an optimum solution search problem, the information processing system including:

a transforming unit configured to binarize an explanatory variable included in a training data set created using a trained machine learning model;

a training unit configured to train an Ising model by performing machine learning with a relationship between the binarized explanatory variable and a predicted value of the training data set;

an output unit configured to output the trained Ising model;

an optimum solution calculating unit configured to calculate an optimum solution of the optimum solution search problem, using the trained Ising model; and

a display unit configured to display the optimum solution.

[8] A program for causing an information processing device that supports creation of an Ising model for causing an annealing-type optimization machine to solve an optimum solution search problem, to perform:

a step of binarizing an explanatory variable included in a training data set created using a trained machine learning model;

a step of training an Ising model by performing machine learning with a relationship between the binarized explanatory variable and a predicted value of the training data set; and

a step of outputting the trained Ising model.

[9] An Ising model creation support method of an information processing device that supports creation of an Ising model for causing an annealing-type optimization machine to solve an optimum solution search problem, the method comprising:

binarizing an explanatory variable included in a training data set created using a trained machine learning model;

training an Ising model by performing machine learning with a relationship between the binarized explanatory variable and a predicted value of the training data set; and

outputting the trained Ising model.

Effect of the invention

According to the present disclosure, an information processing device, an information processing system, a program, and an Ising model creation support method that can support creation of an Ising model for causing an annealing-type optimization machine to solve an optimum solution search problem can be provided.

BRIEF DESCRIPTION OF THE DRAWINGS

[FIG. 1] FIG. 1 is a configuration diagram of an example of an information processing system according to an embodiment.

[FIG. 2] FIG. 2 is a hardware configuration diagram of an example of a computer according to the present embodiment.

[FIG. 3] FIG. 3 is a configuration diagram of an example of the information processing system according to the present embodiment.

[FIG. 4] FIG. 4 is a specific example of a combination of components of a composite material.

[FIG. 5] FIG. 5 is an explanatory diagram of an example illustrating an outline of a process according to the present embodiment.

[FIG. 6] FIG. 6 is a flowchart illustrating an example of a processing procedure of the information processing system according to the present embodiment.

[FIG. 7] FIG. 7 is an explanatory diagram of an example of processing in steps S104 to S108.

[FIG. 8] FIG. 8 is an explanatory diagram of an example of processing in step S110.

[FIG. 9] FIG. 9 is an explanatory diagram of an example of a training data set.

[FIG. 10] FIG. 10 is an explanatory diagram of an example of parameters learned by machine learning by an Ising mathematical model using the training data set.

[FIG. 11] FIG. 11 is a flowchart of an example of a process of creating input information for an annealing-type optimization machine.

[FIG. 12] FIG. 12 is an explanatory diagram of an example of a representation of an inequality constraint included in input information for the annealing-type optimization machine 10.

[FIG. 13] FIG. 13 is an explanatory diagram of an example of input information for an annealing-type optimization machine.

## DESCRIPTION OF EMBODIMENTS

Next, embodiments of the present invention will be described in detail. Here, the present invention is not limited to the following embodiments.

<System Configuration>

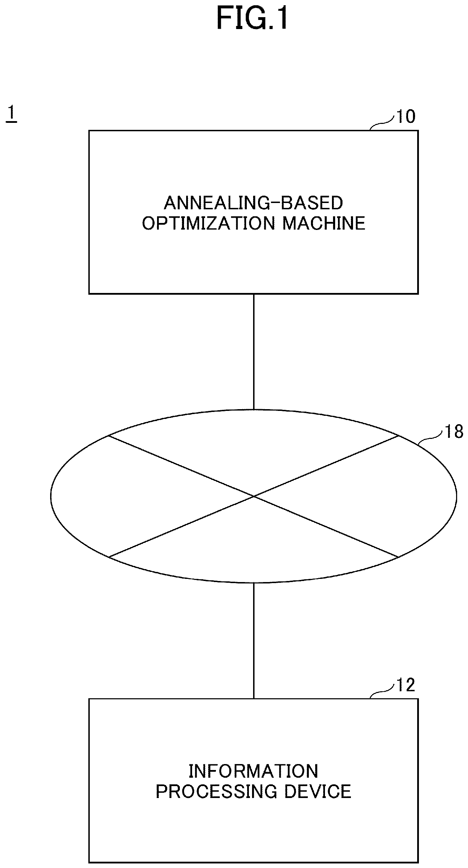

FIG. 1 is a configuration diagram of an example of an information processing system according to the present embodiment. An information processing system 1 illustrated in FIG. 1 is configured to include an annealing-type optimization machine 10 and an information processing device 12. The annealing-type optimization machine 10 and the information processing device 12 are connected via a communication network 18 such as a local area network (LAN) or the Internet so that data communication can be performed.

The annealing-type optimization machine 10 is an example of a device that solves an optimum solution search problem (an optimization problem), using an Ising model. The optimization problem is a problem of finding a solution that minimizes or maximizes an objective function among solutions that satisfy a constraint condition.

Additionally, a combinatorial optimization problem is an optimization problem having a combinatorial structure. The combinatorial optimization problem is a problem of finding a combination of variables that minimizes or maximizes an objective function among combinations of variables that satisfy a constraint condition.

The annealing-type optimization machine 10 may be realized by a quantum computer of a quantum annealing, or may be realized by an Ising machine (an annealing machine) in which the quantum annealing is implemented by a digital circuit such as a field programmable gate array (FPGA) or a graphics processing unit (GPU). The annealing-type optimization machine 10 may be realized by, for example, the Digital Annealer (registered trademark), which is an example of the Ising machine.

The annealing-type optimization machine 10 solves an optimization problem reduced to the Ising model by a convergence operation of the Ising model. Here, the Ising model can also be expressed using QUBO. The energy function of the Ising model and the cost function of the QUBO are equivalent by variable transformation.

The Ising model is a statistical mechanical model representing the behavior of a magnetic material. The Ising model has a property that a state of a spin is updated so that the energy (Hamiltonian) is minimized by an interaction between the spins of the magnetic material, and the energy is finally minimized. The annealing-type optimization machine 10 reduces the optimization problem to the Ising model, and obtains a state in which the energy is minimized as an optimum solution of the optimization problem to solve the optimization problem.

The information processing device 12 is a device operated by a user, such as a PC, a tablet terminal, or a smartphone. The information processing device 12 supports a user who wants to cause the annealing-type optimization machine 10 to solve the optimization problem, to create an Ising model for causing the annealing-type optimization machine 10 to solve the optimization problem, as described later.

Additionally, the information processing device 12 creates input information for the annealing-type optimization machine 10 that is input to the annealing-type optimization machine 10 in order to solve the optimization problem, based on a user operation. The input information input to the annealing-type optimization machine 10 includes a parameter of the Ising model created as described later, a constraint condition, and the like.

The user can cause the annealing-type optimization machine 10 to solve the optimization problem reduced to the Ising model by inputting the input information for the annealing-type optimization machine 10 to the annealing-type optimization machine 10.

As described above, the information processing device 12 supports the user to create the Ising model for causing the annealing-type optimization machine 10 to solve the optimization problem. Additionally, the information processing device 12 receives the optimum solution of the optimization problem solved by the annealing-type optimization machine 10, and outputs the optimum solution so that the user can confirm the optimum solution, for example, by displaying the optimum solution on a display device, and the like.

Here, the information processing system 1 of FIG. 1 is an example, and may be configured such that a user accesses and uses the information processing device 12 from a user terminal (not illustrated) connected to the information processing device 12 via the communication network 18.

Additionally, the annealing-type optimization machine 10 may be realized as a cloud computing service. For example, the annealing-type optimization machine 10 may be made available by calling an application programming interface (API) via the communication network 18.

Furthermore, the annealing-type optimization machine 10 is not limited to one realized as a cloud computing service, and may be realized on-premise or may be operated by another company. The annealing-type optimization machine 10 may be realized by multiple computers.

Additionally, in the configuration in which the user accesses and uses the information processing device 12, the information processing device 12 may be realized as a cloud computing service, may be realized on-premise, may be operated by another company, or may be realized by multiple computers. It is needless to say that the information processing system 1 in FIG. 1 has various system configuration examples according to applications and purposes.

<Hardware Configuration>

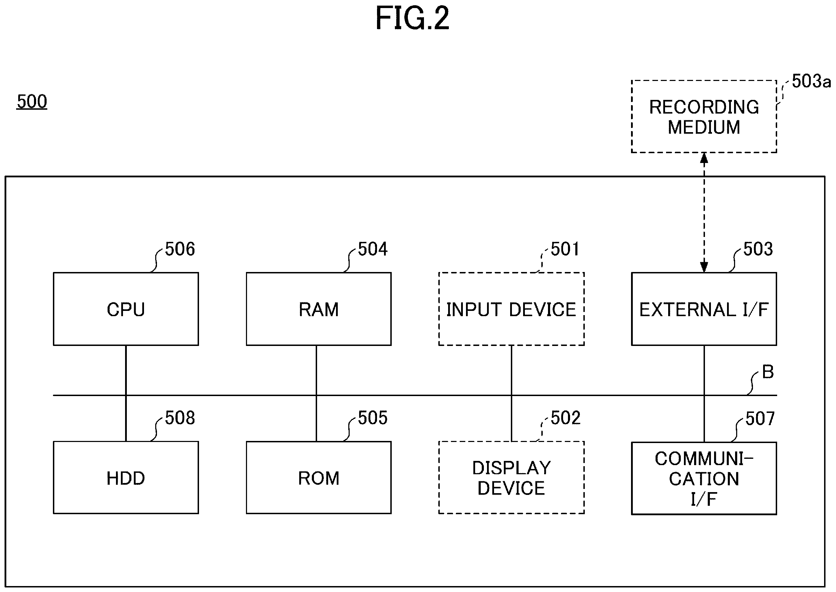

The information processing device 12 of FIG. 1 is realized by, for example, a computer 500 having a hardware configuration illustrated in FIG. 2.

FIG. 2 is a hardware configuration diagram of an example of a computer according to the present embodiment. The computer 500 of FIG. 2 includes an input device 501, a display device 502, an external I/F 503, a RAM 504, a ROM 505, a CPU 506, a communication I/F 507, an HDD 508, and the like, which are connected to each other via a bus B. Here, the input device 501 and the display device 502 may be configured to be connected to each other for use.

The input device 501 is a touch panel, an operation key and a button, a keyboard and a mouse, or the like used by the user to input various signals. The display device 502 includes a display, such as a liquid crystal display or an organic EL display, which displays a screen, a speaker, which outputs sound data such as voice or sound, and the like. The communication I/F 507 is an interface for the computer 500 to perform data transmission.

Additionally, the HDD 508 is an example of a non-volatile storage device that stores programs and data. The stored programs and data include an operating system (OS), which is basic software for controlling the entire computer 500, applications for providing various functions on the OS, and the like. Here, the computer 500 may use a drive device (for example, a solid state drive: SSD and the like) using a flash memory as a storage media instead of the HDD 508.

The external I/F 503 is an interface with an external device. The external device is a recording medium 503a and the like. This allows the computer 500 to read from and/or write to the recording medium 503a via the external I/F 503. The recording medium 503a is a flexible disk, a CD, a DVD, an SD memory card, a USB memory, and the like.

The ROM 505 is an example of a non-volatile semiconductor memory (storage device) that can retain programs and data even when the power is turned off. The ROM 505 stores programs and data such as a BIOS executed when the computer 500 is activated, OS settings, network settings, and the like. The RAM 504 is an example of the volatile semiconductor memory (storage device) that temporarily stores the programs and data.

The CPU 506 is an arithmetic device that reads a program or data from the storage device, such as the ROM 505 and the HDD508, onto the RAM 504 and executes processing to control the entire computer 500 or achieve a function thereof. The information processing device 12 according to the present embodiment can achieve various functions as described below. Here, description of a hardware configuration of the annealing-type optimization machine 10 will be omitted.

<Functional Configuration>

A configuration of the information processing system 1 according to the present embodiment will be described. Here, in the following, as an example of the optimization problem, an example of a combinatorial optimization problem of searching for an optimum component combination satisfying a desired property from among all component combinations of a composite material will be described.

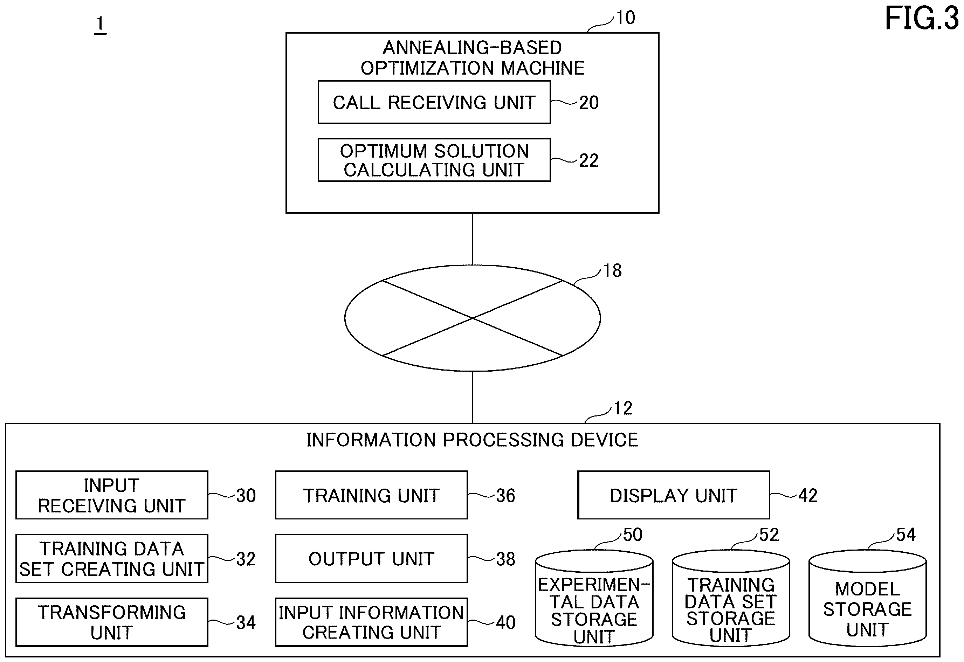

FIG. 3 is a configuration diagram of an example of the information processing system according to the present embodiment. Here, in the configuration diagram of FIG. 3, a portion that is unnecessary for the description of the present embodiment is omitted as appropriate. The annealing-type optimization machine 10 includes a call receiving unit 20 and an optimum solution calculating unit 22. The information processing device 12 includes an input receiving unit 30, a training data set creating unit 32, a transforming unit 34, a training unit 36, an output unit 38, an input information creating unit 40, a display unit 42, an experimental data storage unit 50, a training data set storage unit 52, and a model storage unit 54.

The experimental data storage unit 50 stores experimental data obtained from an experiment result. The experimental data includes a combination of components of the composite material (composition of components) and a physical property value of the composite material having the composition of components. Additionally, the training data set storage unit 52 stores a training data set to be described later. Additionally, the model storage unit 54 stores a machine learning model and an Ising mathematical model. Here, the Ising mathematical model is a mathematical model that becomes equivalent to the Ising model by limiting an input to binary data.

The input receiving unit 30 is an input interface that receives a user operation. The input receiving unit 30 receives an input of information necessary for the annealing-type optimization machine 10 to solve the combinatorial optimization problem from the user.

The training data set creating unit 32 creates the training data set, using the machine learning model that has been trained with the experimental data stored in the experimental data storage unit 50, and stores the training data set in the training data set storage unit 52. The trained machine learning model is an AI model that reproduces the tendency of the experimental data stored in the experimental data storage unit 50.

The trained machine learning model is any one algorithm selected from the group consisting of a linear regression model, a random forest model, a Gaussian process model, and a neural network model, or an ensemble model obtained by combining these algorithms.

The transforming unit 34 binarizes an explanatory variable included in the training data set created using the trained machine learning model. For example, the transforming unit 34 converts a value of the explanatory variable representing the composition of the components of the composite material included in the training data set into binary data.

The training unit 36 trains the Ising mathematical model by performing machine learning with a relationship between the explanatory variable that is binarized and a predicted value corresponding to the explanatory variable. For example, the training unit 36 trains the Ising mathematical model that becomes equivalent to an Ising model by limiting the input to binary data by performing machine learning with a correspondence between the binary data representing the composition of the components of the composite material and the physical property value of the composite material having the composition of the components, by using the binary data representing the composition of the components of the composite material as an input and the physical property value of the composite material having the composition of the components as an output.

The Ising mathematical model that becomes equivalent to the Ising model by limiting the input to the binary data is a Factorization Machines (FM) model, a Field-aware Factorization Machines (FFM) model, or a general linear model.

The trained Ising mathematical model is equivalent to an Ising model that predicts a physical property value based on the binary data representing the composition of the components of the composite material. As described, the training unit 36 performs approximation of the trained machine learning model as the trained Ising model.

The information processing device 12 according to the present embodiment performs approximation of the trained machine learning model with the Ising model, thereby enabling the cooperation with the annealing-type optimization machine 10 and enabling the AI prediction in the annealing-type optimization machine 10.

The output unit 38 outputs the trained Ising model. The output unit 38 may output a parameter of the trained Ising model, which will be described later. The input information creating unit 40 creates input information for the annealing-type optimization machine 10 that includes the parameter of the trained Ising model and a constraint condition, and transmits the input information to the annealing-type optimization machine 10.

The display unit 42 displays the optimum solution received from the annealing-type optimization machine 10 on the display device 502 to allow the user to confirm the optimum solution. The optimum solution displayed on the display device 502 is displayed as, for example, information on the composition of the components of the composite material, which is easy for the user to understand.

The call receiving unit 20 receives a call from the information processing device 12, and receives the input information for the annealing-type optimization machine 10 that includes the parameter of the trained Ising model and the constraint condition from the information processing device 12. Based on the input information for the annealing-type optimization machine 10 that includes the parameter of the trained Ising model and the constraint condition, received by the call receiving unit 20, the optimum solution calculating unit 22 searches for an optimum solution of the composition of the components of the composite material by obtaining a composition of the components in which the Ising model becomes minimum or maximum among the compositions of the components satisfying the constraint condition. The call receiving unit 20 transmits the searched optimum solution to the information processing device 12.

Here, the configuration diagram of FIG. 3 is an example. Various configurations can be considered for the information processing system 1 according to the present embodiment.

<Outline of Processing>

With the development of the AI technology, the physical property of the composite material can be predicted at high speed if a prediction model can be established. However, in a composite material having many combinations of components, it is difficult to select a combination having an optimum physical property from among all combinations of components due to what is called combination explosion.

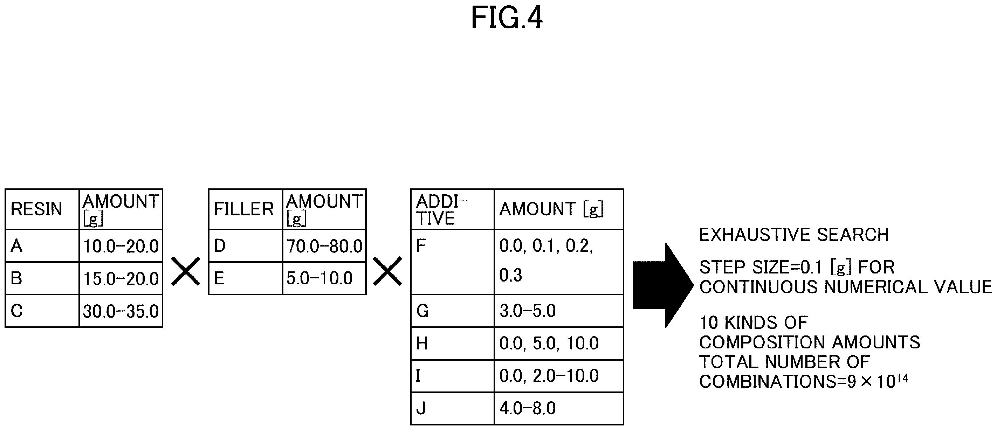

FIG. 4 is a specific example of a combination of the components of the composite material. In FIG. 4, when the step size of the amount [g] represented by the continuous numerical value is set to 0.1 [g], the total number of combinations becomes $9 \times 10^{14}$ in 10 kinds of components of the composite material, and the combination explosion occurs. Therefore, in the example of FIG. 4, it is common to reduce the total number of the combinations of the components by limiting the types or amounts of the components and to select a combination having a good physical property in the limited range of the combinations, but there is a possibility of falling into a local optimum solution.

With respect to the above, if the annealing-type optimization machine 10, which is good at solving the combinatorial optimization problem, is used, the exhaustive search can be performed even for the combinations of the components illustrated in FIG. 4, and the global optimum solution can be obtained. However, the combinatorial optimization problem that can be solved by the annealing-type optimization machine 10 is a combinatorial optimization problem that can be converted into an Ising model.

Therefore, in the present embodiment, by constructing a machine learning model that reproduces the tendency of the experimental data, and performing approximation of the machine learning model as an Ising model, a method that enables cooperation between the AI technology and the annealing-type optimization machine 10 is established. In other words, in the present embodiment, the AI prediction in the annealing-type optimization machine 10 can be realized.

Additionally, in the present embodiment, approximation of the trained machine learning model is performed as the Ising model, so that the range of the optimization problem that can be converted into an Ising model is increased, and the time and effort for formulating, with an Ising model, the optimization problem that the user desires to solve can be reduced.

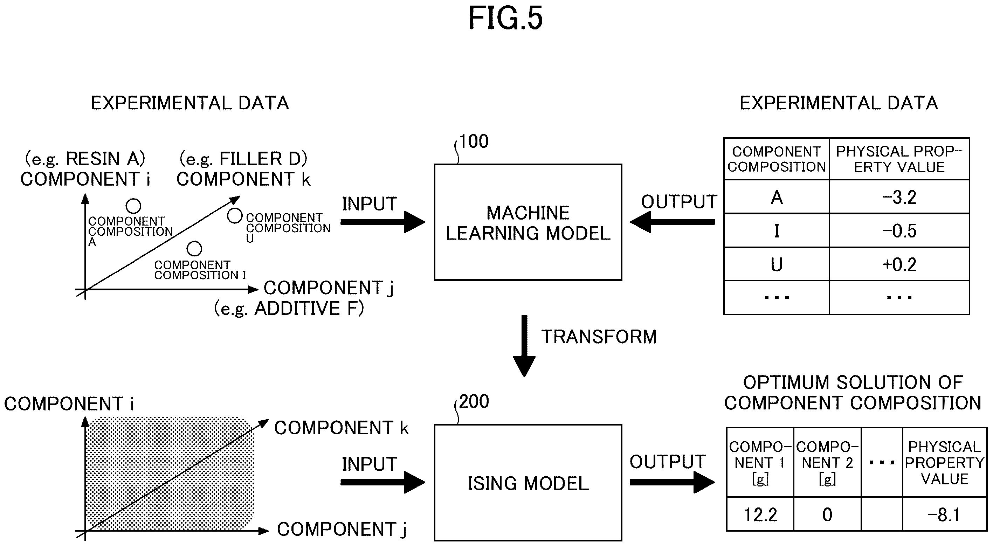

FIG. 5 is an explanatory diagram illustrating an example of an outline of processing according to the present embodiment. In the present embodiment, experimental data obtained from an experimental result is prepared. The experimental data of FIG. 5 includes the composition of the components of the composite material and the physical property value of the composite material having the composition of the components. The machine learning is performed on a machine learning model 100 by using the composition of the components of the experimental data as an input and a physical property value of the composite material having the composition of the components as an output.

The machine learning model 100 (the trained machine learning model 100) trained by performing machine learning by using the composition of the components of the experimental data as an input and the physical property value of the composite material having the composition of the components as an output is an AI model that reproduces the tendency of the experimental data stored in the experimental data storage unit 50.

As illustrated in FIG. 5, in the present embodiment, transformation is performed for approximation of the trained machine learning model 100 with an Ising model 200. The annealing-type optimization machine 10 performs an exhaustive search using the Ising model 200 of FIG. 5, and can calculate an optimum solution of the composition of the components.

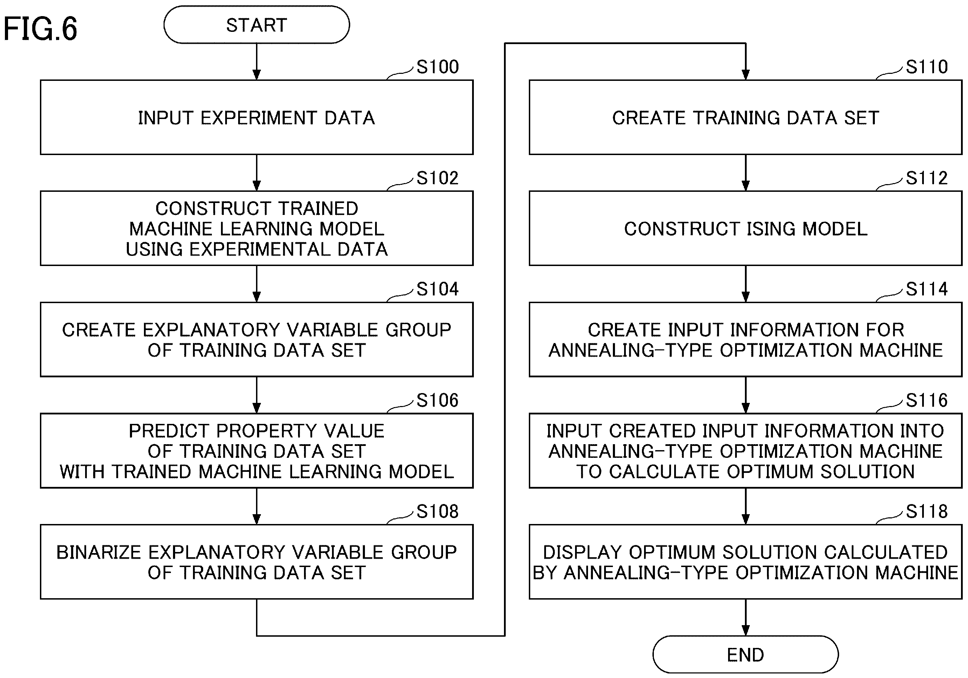

FIG. 6 is a flowchart illustrating an example of a processing procedure of the information processing system according to the present embodiment.

In step S100, the information processing device 12 receives an input of the experimental data from the user. In step S102, for example, as illustrated in FIG. 5, the information processing device 12 performs machine learning using the experimental data to construct the trained machine learning model 100.

In step S104, the information processing device 12 creates several tens of thousands to several hundreds of thousands of explanatory variable groups of the training data set, for example, using random numbers or predetermined steps. For example, the information processing device 12 creates several tens of thousands to several hundreds of thousands of values representing the compositions of the components of the composite material as the explanatory variable groups of the training data set, using random numbers.

In step S106, the information processing device 12 inputs the explanatory variable group created in step S104 into the trained machine learning model 100 to predict the property value of the training data set. For example, the information processing device 12 inputs values representing the composition of the components of the composite material into the trained machine learning model 100 to predict the physical property value of the composite material having the composition of the components.

In step S108, the information processing device 12 binarizes the explanatory variable group created in step S104. For example, the information processing device 12 binarizes the values representing the composition of the components of the composite material created in step S104.

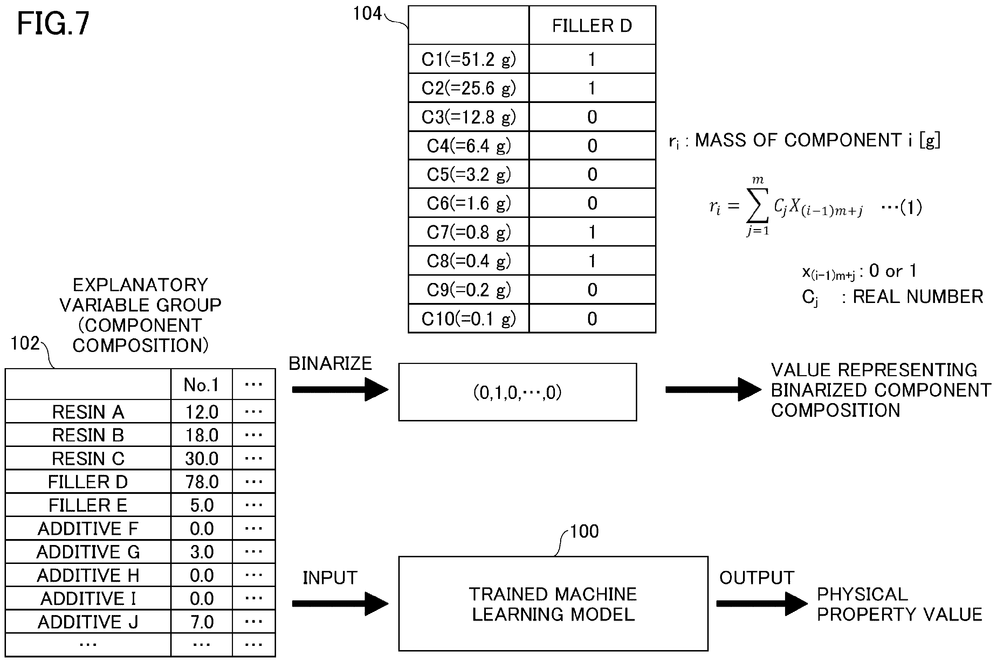

The processing of steps S104 to S108 will be described with reference to FIG. 7. FIG. 7 is an explanatory diagram of an example of the processing of steps S104 to S108. In step S104, as the explanatory variable groups of the training data set, explanatory variable groups 102 having several tens of thousands to several hundreds of thousands of explanatory variables each representing the mass [g] of a component i of the composite material are created using random numbers. The explanatory variable group 102 indicates that, for example, the mass of the component "filler D" in the composition of the components "No. 1" is "78.0 g".

In step S106, the explanatory variable group 102 of the training data set created in step S104 is input into the trained machine learning model 100 to output the physical property value (the predicted value) of the composite material having the composition of the components represented by the explanatory variable group 102.

In step S108, the explanatory variable group 102 of the training data set created in step S104 is binarized. For example, the mass [g] of the component i of the composite material can be represented by ri by the following Equation (1).
[Equation 1]

$$r_i : \text{Mass [g] OF Component i}$$

$$r_i = \sum_{j=1}^{m} C_j X_{(i-1)m+j} \quad \cdots (1)$$

$$x_{(i-1)m+j} : 0 \text{ or } 1$$
$$C_j \quad : \text{Real Number}$$

For example, the mass of the composition "filler D" of the explanatory variable group 102 is "78.0 g". When the mass [78.0 g] of the component "filler D" is represented by the above Equation (1), the mass [78.0 g] of the component "Filler D" can be represented as an explanatory variable 104 and becomes binary data. By expressing the masses of all the components included in the explanatory variable group 102 by Equation (1), the values representing the composition of the components of the composite material can be binarized.

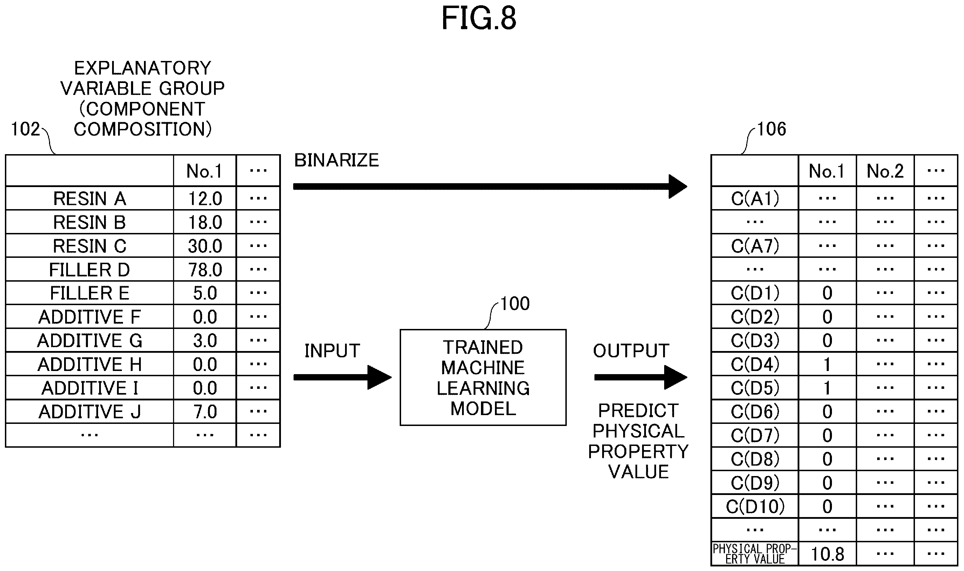

Returning to step S110 in FIG. 6, the information processing device 12 creates the training data set including the property values of the training data set predicted in step S106 and the explanatory variable groups binarized in step S108, for example, as illustrated in FIG. 8. FIG. 8 is an explanatory diagram of an example of the processing of step S110. The information processing device 12 creates a training data set 106 in which the physical property of the composite material having the composition of components represented by the explanatory variable group 102 predicted in step S106 are associated with the binary data representing the composition of components of the composite material.

Returning to step S112 of FIG. 6, the information processing device 12 uses the training data set created in step S110 to train the Ising mathematical model by performing machine learning. By limiting the input to binary data, the Ising mathematical model is equivalent to the Ising model. In step S112, it is conceivable that the Ising model is trained by machine learning by using the training data set created in step S110. Here, an example in which the Ising mathematical model is the FM model of Equation (2) will be described.
[Equation 2]

$$\phi(w, x) = w_0 + \sum_{i=1}^{n} w_i x_i + \sum_{i=1}^{n} \sum_{j=i+1}^{n} \langle v_i \cdot v_j \rangle x_i x_j \quad \cdots (2)$$

$$\langle v_i, v_j \rangle := \sum_{f=1}^{k} v_{i,f} \cdot v_{j,f}$$

The FM model of the above Equation (2) becomes equivalent to, for example, the Ising model of the following Equation (3) when x is "0" or "1".
[Equation 3]

$$E = \sum_{i=1}^{n} Q_{ii} x_i + \sum_{i=1}^{n} \sum_{j=i+1}^{n} Q_{ij} x_i x_j \quad \cdots (3)$$

$$x = 0 \text{ or } 1$$

The FM model of the above Equation (2) whose input is limited to binary data is equivalent to the Ising model of the above Equation (3), and thus, by performing machine learning using the training data set created in step S110, the Ising model 200 that predicts the output of the trained machine learning model 100 can be constructed. As described, the information processing device 12 can perform approximation of the trained machine learning model 100 with the Ising model 200.

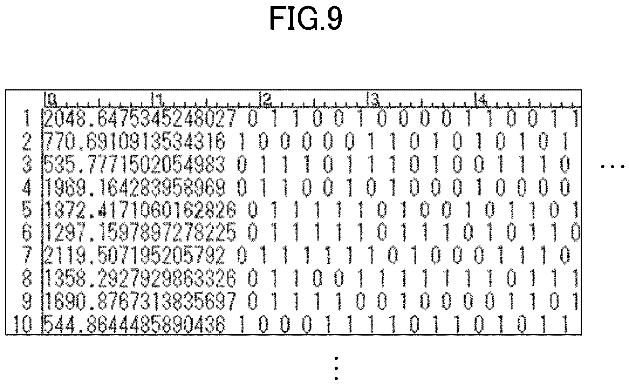

The machine learning of the FM model of the above Equation (2) using the training data set created in step S110 can be performed using xLearn, for example. Here, xLearn is an example of a machine learning tool that can limit explanatory variables to binary data. For example, xLearn trains the Ising mathematical model by performing machine learning with the training data set as illustrated in FIG. 9.

FIG. 9 is an explanatory diagram of an example of the training data set. In the training data set of FIG. 9, the first column represents property values, and the second and subsequent columns represent binarized explanatory variables. Additionally, in the training data set of FIG. 9, each row of the second and subsequent columns represents the composition of the components of the composite material.

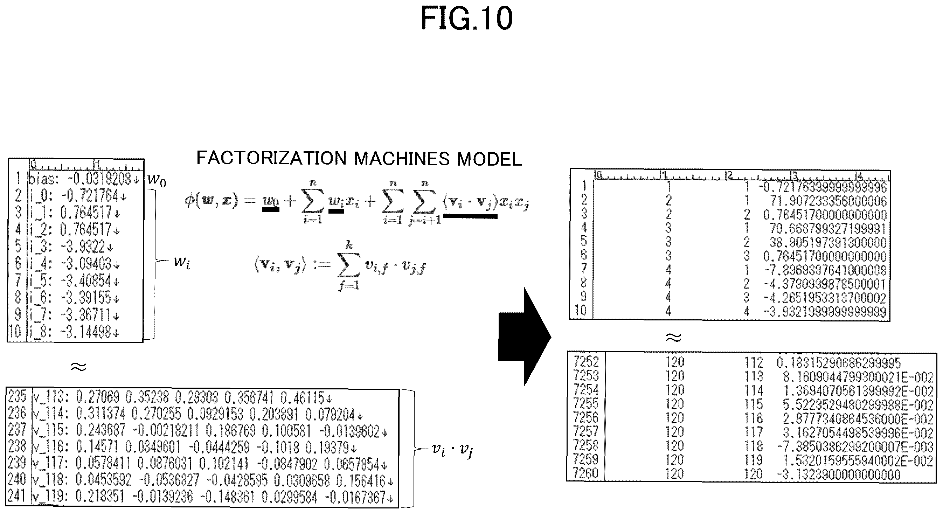

The Ising mathematical model trained by performing machine learning with the training data set learns parameters as illustrated in FIG. 10, for example. The xLearn can output the parameters as illustrated in FIG. 10 from the Ising mathematical model trained by performing machine learning with the training data set.

FIG. 10 is an explanatory diagram of an example of the parameters learned by machine learning by the Ising mathematical model with the training data set. As illustrated in FIG. 10, xLearn outputs $\omega_0$, $\omega_i$, and each matrix element of $<v_i \cdot v_j>$ as the parameters learned by machine learning by the Ising mathematical model with the training data set. The information processing device 12 can create a matrix as illustrated on the right side of FIG. 10, for example, from each matrix element illustrated on the left side of FIG. 10. On the right side of FIG. 10, the first and second columns indicate matrix numbers, and the third column indicates matrix elements. Each matrix element is a regression coefficient of the Ising mathematical model approximating the trained machine learning model 100.

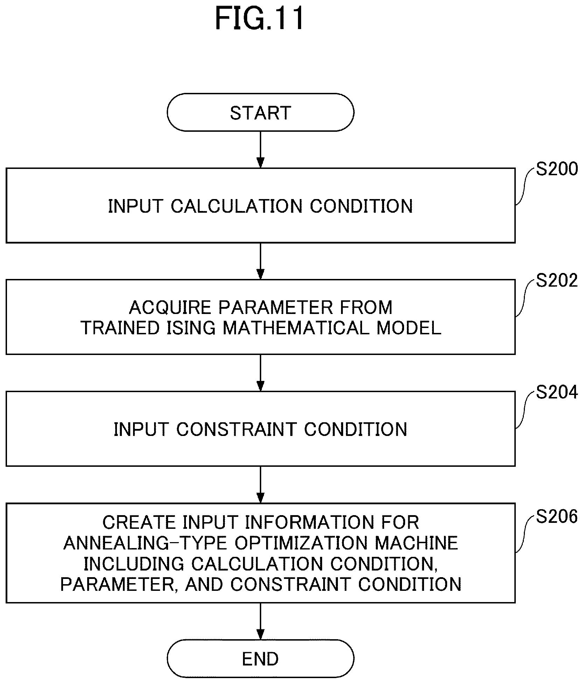

Returning to step S114 of FIG. 6, the information processing device 12 creates the input information for the annealing-type optimization machine 10, for example, in the procedure as illustrated in FIG. 11. FIG. 11 is a flowchart of an example of a process of creating the input information for the annealing-type optimization machine.

In step S200, the information processing device 12 receives, from the user, an input of a calculation condition under which the calculation of the annealing-type optimization machine 10 is performed.

In step S202, as described with reference to FIG. 10, the information processing device 12 acquires a parameter with which a QUBO matrix (a matrix Q) can be created from the Ising mathematical model trained by performing machine learning with the training data set.

In step S204, the information processing device 12 receives an input of a constraint condition. The constraint condition is an equality constraint or inequality constraint that must be satisfied by a solution when solving a combinatorial optimization problem. For example, a constraint condition that a certain component is 0.8 [g] or greater can be expressed by an inequality constraint as indicated in the following Equation (4). Equation (4) is an example in which a bit array indicating an amount of a certain component is 0 to 10 bits.

[Equation 4]

$$0.8 \leq \sum_{i=0}^{10} C_i x_i \qquad \cdots (4)$$

In the case of the annealing-type optimization machine 10, in which the right-hand side of the constraint condition must be set to "0", the above Equation (4) is transformed into the following Equation (5).

[Equation 5]

$$-\sum_{i=0}^{10} C_i x_i + 0.8 \leq 0 \qquad \cdots (5)$$

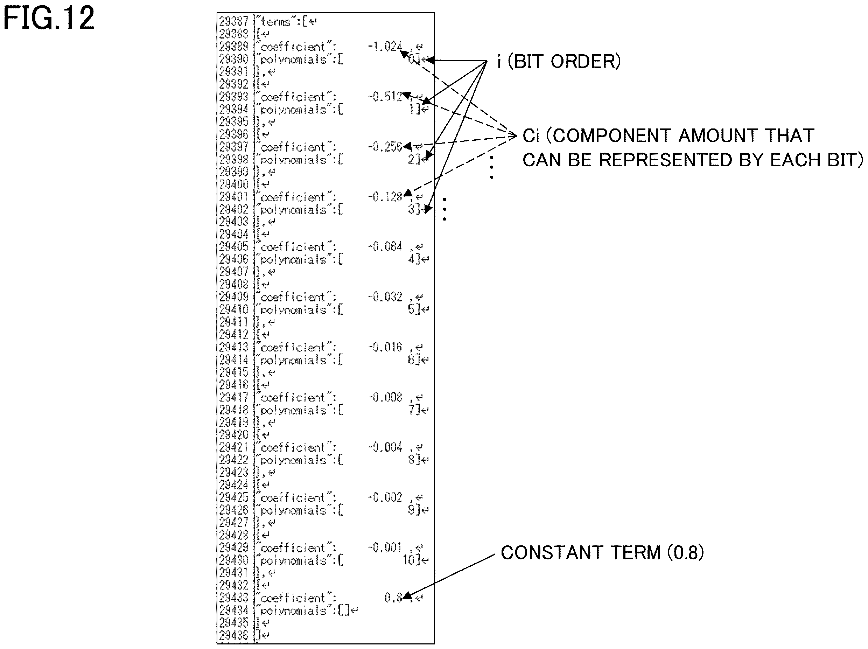

For example, the inequality constraint of the above Equation (4) or (5) can be expressed by a matrix as illustrated in FIG. 12. When the combinatorial optimization problem to be solved has multiple constraint conditions, inputs of the multiple constraint conditions are received as equality constraints or inequality constraints.

In step S206, the information processing device 12 creates the input information for the annealing-type optimization machine 10 that includes the calculation condition input in step S200, the QUBO matrix created based on the parameter acquired in step S202, and the constraint condition input in step S204. The input information for the annealing-type optimization machine 10 is, for example, an electronic file to be transmitted to the annealing-type optimization machine 10.

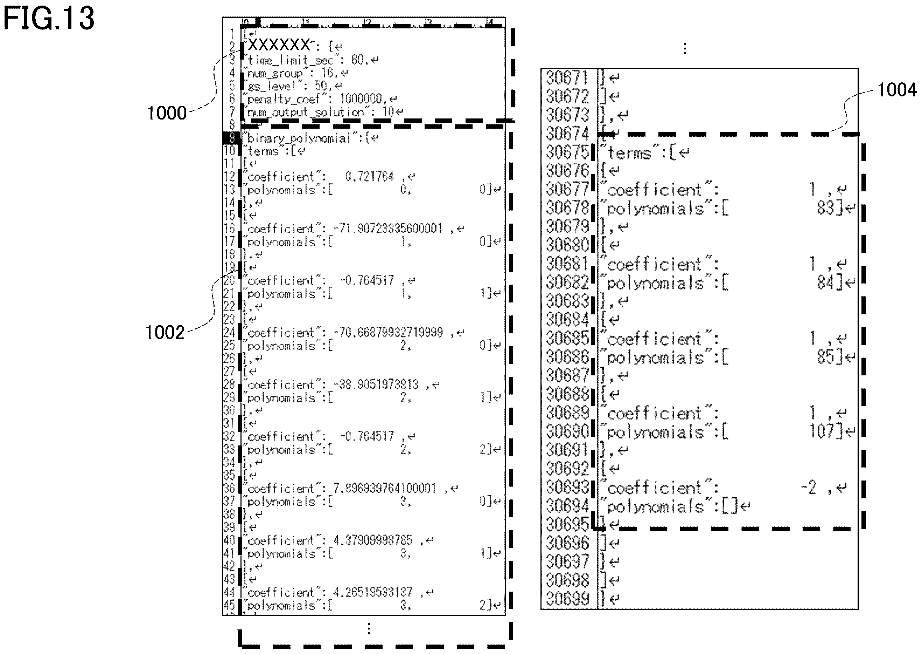

FIG. 13 is an explanatory diagram of an example of the input information for the annealing-type optimization machine. The input information for the annealing-type optimization machine 10 of FIG. 13 includes computation condition information 1000, QUBO matrix information 1002, and constraint condition information 1004. The input information for the annealing-type optimization machine 10 is described in a json format, for example.

Returning to step S116 of FIG. 6, the information processing device 12 transmits the input information for the annealing-type optimization machine 10 to the annealing-type optimization machine 10. The annealing-type optimization machine 10 calculates an optimum solution from among solutions satisfying the constraint condition in accordance with the received input information.

In step S118, the annealing-type optimization machine 10 transmits information representing the calculated optimum solution to the information processing device 12. The information processing device 12 converts the information (bit information) representing the optimum solution received from the annealing-type optimization machine 10 into information such as a combination of components of the composite material, which is easy for the user to understand, and outputs the information. For example, the information processing device 12 displays a component (a material name) of the composite material of the optimum solution and the mass of the component.

In the present embodiment, the Ising model that can express only a simple function is approximated by the nonlinear machine learning model (AI model), so that the nonlinear machine learning model can be operated on the annealing-type optimization machine 10. According to the present embodiment, an exhaustive search using a non-linear machine learning model, which could not be performed due to a time restriction, can be performed.

The composition of the components of the composite material that is searched for as the optimum solution in the present embodiment can be used to control a composite material generating device, such as an aluminum alloy manufacturing device, that generates the composite material by specifying materials to be mixed and the masses of the materials.

Additionally, the present embodiment can also be used to search for a composition of components of a semiconductor material as an example of the composite material. Examples of the semiconductor material include a resist material, an adhesive, a pressure-sensitive adhesive, a sealing material, and the like, and the semiconductor material is a composite material including multiple resins, an additive, and/or a filler. Examples of the property of the resist material include an exposure property, resolution, solvent resistance, and the like. Examples of the property of the adhesive include reflow resistance, a low stress property, easy processability, and the like. Examples of the property of the pressure-sensitive adhesive include adhesion, holding power, a peeling property, and the like. Examples of the property of the sealing material include a high-temperature insulation property, resistance to thermal decomposition, a defect rate, and the like.

The information processing system 1 according to the present embodiment creates the training data set of the Ising mathematical model by using the machine learning model that has been trained with the experimental data representing the composition of the components of the semiconductor material and the property of the semiconductor material composed of the composition of the components. The information processing system 1 converts the values of the explanatory variables representing the composition of the components of the semiconductor material in the training data set into binary data to train the Ising mathematical model by performing machine learning. By creating the input information for the annealing-type optimization machine 10, using the trained Ising mathematical model and inputting the input information to the annealing-type optimization machine 10, a composition of components of a semiconductor material having a superior property is calculated as an optimum solution in the present embodiment. The composition of the components of the semiconductor material having a superior property that is calculated by the annealing-type optimization machine 10 can be used for, for example, control (condition input) of the semiconductor material manufacturing device.

As described above, according to the information processing system 1 of the present embodiment, the user's time and effort required for causing the annealing-type optimization machine 10 to solve the optimization problem can be reduced.

While the present embodiments have been described above, it will be understood that various changes in form and detail may be made therein without departing from the spirit and scope of the claims. Although the present invention has been described based on the embodiments above, the present invention is not limited to the above-described embodiments, and various modifications can be made within the scope described in the claims. This application claims priority to Basic Application No. 2022-109916 filed on July 7, 2022 with the Japan Patent Office, the entire contents of which are incorporated herein by reference.

Description of reference symbols

1 information processing system
10 annealing-type optimization machine
12 information processing device
18 communication network
20 call receiving unit
22 optimum solution calculating unit
30 input receiving unit
32 training data set creating unit

34 transforming unit
36 training unit
38 output unit
40 input information creating unit
42 display unit
50 experimental data storage unit
52 training data set storage unit
54 model storage unit

**Claims**

1. An information processing device that supports creation of an Ising model for causing an annealing-type optimization machine to solve an optimum solution search problem, the information processing device comprising:

   a transforming unit configured to binarize an explanatory variable included in a training data set created using a trained machine learning model;
   a training unit configured to train an Ising model by performing machine learning with a relationship between the binarized explanatory variable and a predicted value of the training data set; and
   an output unit configured to output the trained Ising model.

2. The information processing device as claimed in claim 1, wherein the training unit is configured to train an Ising mathematical model that becomes equivalent to the Ising model by limiting an input to binary data, by performing the machine learning with the relationship between the binarized explanatory variable and the predicted value of the training data set.

3. The information processing device as claimed in claim 1 or 2, further comprising an input information creating unit configured to create input information for the annealing-type optimization machine, the input information including a parameter of the trained Ising model and a constraint condition.

4. The information processing device as claimed in claim 2, wherein the Ising mathematical model is a factorization machines (FM) model, a field-aware factorization machines (FFM) model, or a general linear model.

5. The information processing device as claimed in any one of claims 1 to 4, wherein the trained machine learning model is any one algorithm selected from the group consisting of a linear regression model, a random forest model, a Gaussian process model, and a neural network model, or an ensemble model of a combination thereof.

6. The information processing device as claimed in any one of claims 1 to 5, further comprising a training data set creating unit configured to create the training data set by using the trained machine learning model that is trained with experimental data.

7. An information processing system including an annealing-type optimization machine; and an information processing device that supports creation of an Ising model for causing the annealing-type optimization machine to solve an optimum solution search problem, the information processing system comprising:

   a transforming unit configured to binarize an explanatory variable included in a training data set created using a trained machine learning model;
   a training unit configured to train an Ising model by performing machine learning with a relationship between the binarized explanatory variable and a predicted value of the training data set;
   an output unit configured to output the trained Ising model;
   an optimum solution calculating unit configured to calculate an optimum solution of the optimum solution search problem, using the trained Ising model; and
   a display unit configured to display the optimum solution.

8. A program for causing an information processing device that supports creation of an Ising model for causing an annealing-type optimization machine to solve an optimum solution search problem, to perform:

   a step of binarizing an explanatory variable included in a training data set created using a trained machine learning model;
a step of training an Ising model by performing machine learning with a relationship between the binarized explanatory variable and a predicted value of the training data set; and
a step of outputting the trained Ising model.

9. An Ising model creation support method of an information processing device that supports creation of an Ising model for causing an annealing-type optimization machine to solve an optimum solution search problem, the method comprising:

binarizing an explanatory variable included in a training data set created using a trained machine learning model;
training an Ising model by performing machine learning with a relationship between the binarized explanatory variable and a predicted value of the training data set; and
outputting the trained Ising model.

# FIG.1

# FIG.2

**FIG.3**

**10** ANNEALING-BASED OPTIMIZATION MACHINE

- CALL RECEIVING UNIT ~20
- OPTIMUM SOLUTION CALCULATING UNIT ~22

**18**

**12** INFORMATION PROCESSING DEVICE

- INPUT RECEIVING UNIT ~30
- TRAINING DATA SET CREATING UNIT ~32
- TRANSFORMING UNIT ~34
- TRAINING UNIT ~36
- OUTPUT UNIT ~38
- INPUT INFORMATION CREATING UNIT ~40
- DISPLAY UNIT ~42
- EXPERIMEN-TAL DATA STORAGE UNIT ~50
- TRAINING DATA SET STORAGE UNIT ~52
- MODEL STORAGE UNIT ~54

**1**

EP 4 553 723 A1

# FIG.4

| RESIN | AMOUNT [g] |
|---|---|
| A | 10.0–20.0 |
| B | 15.0–20.0 |
| C | 30.0–35.0 |

$\times$

| FILLER | AMOUNT [g] |
|---|---|
| D | 70.0–80.0 |
| E | 5.0–10.0 |

$\times$

| ADDI-TIVE | AMOUNT [g] |
|---|---|
| F | 0.0, 0.1, 0.2, 0.3 |
| G | 3.0–5.0 |
| H | 0.0, 5.0, 10.0 |
| I | 0.0, 2.0–10.0 |
| J | 4.0–8.0 |

➡

EXHAUSTIVE SEARCH

STEP SIZE=0.1 [g] FOR CONTINUOUS NUMERICAL VALUE

10 KINDS OF COMPOSITION AMOUNTS TOTAL NUMBER OF COMBINATIONS=$9 \times 10^{14}$

EP 4 553 723 A1

# FIG.5

EXPERIMENTAL DATA

(e.g. RESIN A) COMPONENT i  (e.g. FILLER D) COMPONENT k

COMPONENT COMPOSITION A
COMPONENT COMPOSITION U
COMPONENT COMPOSITION I

COMPONENT j (e.g. ADDITIVE F)

INPUT → MACHINE LEARNING MODEL `100`

← OUTPUT

EXPERIMENTAL DATA

| COMPONENT COMPOSITION | PHYSICAL PROPERTY VALUE |
|---|---|
| A | −3.2 |
| I | −0.5 |
| U | +0.2 |
| ... | ... |

TRANSFORM

COMPONENT i

COMPONENT k

COMPONENT j

INPUT → ISING MODEL `200` → OUTPUT

OPTIMUM SOLUTION OF COMPONENT COMPOSITION

| COMPONENT 1 [g] | COMPONENT 2 [g] | ... | PHYSICAL PROPERTY VALUE |
|---|---|---|---|
| 12.2 | 0 | | −8.1 |

EP 4 553 723 A1

**FIG.6**

```
START
```

**S100**
INPUT EXPERIMENT DATA

**S102**
CONSTRUCT TRAINED
MACHINE LEARNING MODEL
USING EXPERIMENTAL DATA

**S104**
CREATE EXPLANATORY VARIABLE GROUP
OF TRAINING DATA SET

**S106**
PREDICT PROPERTY VALUE
OF TRAINING DATA SET
WITH TRAINED MACHINE LEARNING MODEL

**S108**
BINARIZE EXPLANATORY VARIABLE GROUP
OF TRAINING DATA SET

**S110**
CREATE TRAINING DATA SET

**S112**
CONSTRUCT ISING MODEL

**S114**
CREATE INPUT INFORMATION FOR
ANNEALING-TYPE OPTIMIZATION MACHINE

**S116**
INPUT CREATED INPUT INFORMATION INTO
ANNEALING-TYPE OPTIMIZATION MACHINE
TO CALCULATE OPTIMUM SOLUTION

**S118**
DISPLAY OPTIMUM SOLUTION CALCULATED
BY ANNEALING-TYPE OPTIMIZATION MACHINE

```
END
```

# FIG.7

|  | FILLER D |
|---|---|
| C1(=51.2 g) | 1 |
| C2(=25.6 g) | 1 |
| C3(=12.8 g) | 0 |
| C4(=6.4 g) | 0 |
| C5(=3.2 g) | 0 |
| C6(=1.6 g) | 0 |
| C7(=0.8 g) | 1 |
| C8(=0.4 g) | 1 |
| C9(=0.2 g) | 0 |
| C10(=0.1 g) | 0 |

104

$r_i$ : MASS OF COMPONENT i [g]

$$r_i = \sum_{j=1}^{m} C_j X_{(i-1)m+j} \quad \cdots (1)$$

$x_{(i-1)m+j}$ : 0 or 1

$C_j$ : REAL NUMBER

EXPLANATORY
VARIABLE GROUP
(COMPONENT
COMPOSITION)

102

|  | No.1 | ⋯ |
|---|---|---|
| RESIN A | 12.0 | ⋯ |
| RESIN B | 18.0 | ⋯ |
| RESIN C | 30.0 | ⋯ |
| FILLER D | 78.0 | ⋯ |
| FILLER E | 5.0 | ⋯ |
| ADDITIVE F | 0.0 | ⋯ |
| ADDITIVE G | 3.0 | ⋯ |
| ADDITIVE H | 0.0 | ⋯ |
| ADDITIVE I | 0.0 | ⋯ |
| ADDITIVE J | 7.0 | ⋯ |
| ⋯ | ⋯ | ⋯ |

BINARIZE →

(0,1,0,⋯,0)

→ VALUE REPRESENTING
BINARIZED COMPONENT
COMPOSITION

100

INPUT → | TRAINED MACHINE
LEARNING MODEL | OUTPUT → PHYSICAL
PROPERTY VALUE

# FIG.8

EXPLANATORY VARIABLE GROUP (COMPONENT COMPOSITION)

102

|  | No.1 | ... |
|---|---|---|
| RESIN A | 12.0 | ... |
| RESIN B | 18.0 | ... |
| RESIN C | 30.0 | ... |
| FILLER D | 78.0 | ... |
| FILLER E | 5.0 | ... |
| ADDITIVE F | 0.0 | ... |
| ADDITIVE G | 3.0 | ... |
| ADDITIVE H | 0.0 | ... |
| ADDITIVE I | 0.0 | ... |
| ADDITIVE J | 7.0 | ... |
| ... | ... | ... |

BINARIZE

INPUT

100

TRAINED MACHINE LEARNING MODEL

OUTPUT PREDICT PHYSICAL PROPERTY VALUE

106

|  | No.1 | No.2 | ... |
|---|---|---|---|
| C(A1) | ... | ... | ... |
| ... | ... | ... | ... |
| C(A7) | ... | ... | ... |
| ... | ... | ... | ... |
| C(D1) | 0 | ... | ... |
| C(D2) | 0 | ... | ... |
| C(D3) | 0 | ... | ... |
| C(D4) | 1 | ... | ... |
| C(D5) | 1 | ... | ... |
| C(D6) | 0 | ... | ... |
| C(D7) | 0 | ... | ... |
| C(D8) | 0 | ... | ... |
| C(D9) | 0 | ... | ... |
| C(D10) | 0 | ... | ... |
| ... | ... | ... | ... |
| PHYSICAL PROPERTY VALUE | 10.8 | ... | ... |

EP 4 553 723 A1

# FIG.9

| | |0 | |1 | |2 | |3 | |4 | | |
|---|---|---|---|---|---|---|---|---|---|---|---|---|
| 1 | 2048.6475345248027 | 0 1 1 0 0 1 0 0 0 0 1 1 0 0 1 1 |
| 2 | 770.6910913534316 | 1 0 0 0 0 0 1 1 0 1 0 1 0 1 0 1 |
| 3 | 535.7771502054983 | 0 1 1 1 0 1 1 1 0 1 0 0 1 1 1 0 |
| 4 | 1969.164283958969 | 0 1 1 0 0 1 0 1 0 0 0 1 0 0 0 0 |
| 5 | 1372.4171060162826 | 0 1 1 1 1 1 0 1 0 0 1 0 1 1 0 1 |
| 6 | 1297.1597897278225 | 0 1 1 1 1 1 0 1 1 1 0 1 0 1 1 0 |
| 7 | 2119.507195205792 | 0 1 1 1 1 1 1 0 1 0 0 0 1 1 1 0 |
| 8 | 1358.2927929863326 | 0 1 1 0 0 1 1 1 1 1 1 1 0 1 1 1 |
| 9 | 1690.8767313835697 | 0 1 1 1 1 0 0 1 0 0 0 0 1 1 0 1 |
| 10 | 544.8644485890436 | 1 0 0 0 1 1 1 1 0 1 1 0 1 0 1 1 |

...

FIG.10

FACTORIZATION MACHINES MODEL

$$\phi(\boldsymbol{w}, \boldsymbol{x}) = w_0 + \sum_{i=1}^{n} w_i x_i + \sum_{i=1}^{n} \sum_{j=i+1}^{n} \langle \mathbf{v}_i \cdot \mathbf{v}_j \rangle x_i x_j$$

$$\langle \mathbf{v}_i, \mathbf{v}_j \rangle := \sum_{f=1}^{k} v_{i,f} \cdot v_{j,f}$$

# FIG.11

START

INPUT CALCULATION CONDITION ⟋S200

ACQUIRE PARAMETER FROM
TRAINED ISING MATHEMATICAL MODEL ⟋S202

INPUT CONSTRAINT CONDITION ⟋S204

CREATE INPUT INFORMATION FOR
ANNEALING-TYPE OPTIMIZATION MACHINE
INCLUDING CALCULATION CONDITION,
PARAMETER, AND CONSTRAINT CONDITION ⟋S206

END

# FIG.12

```
29387 "terms":[
29388 [
29389 "coefficient":      -1.024 ,
29390 "polynomials":[      0]
29391 ],
29392 [
29393 "coefficient":      -0.512 ,
29394 "polynomials":[      1]
29395 ],
29396 [
29397 "coefficient":      -0.256 ,
29398 "polynomials":[      2]
29399 ],
29400 [
29401 "coefficient":      -0.128 ,
29402 "polynomials":[      3]
29403 ],
29404 [
29405 "coefficient":      -0.064 ,
29406 "polynomials":[      4]
29407 ],
29408 [
29409 "coefficient":      -0.032 ,
29410 "polynomials":[      5]
29411 ],
29412 [
29413 "coefficient":      -0.016 ,
29414 "polynomials":[      6]
29415 ],
29416 [
29417 "coefficient":      -0.008 ,
29418 "polynomials":[      7]
29419 ],
29420 [
29421 "coefficient":      -0.004 ,
29422 "polynomials":[      8]
29423 ],
29424 [
29425 "coefficient":      -0.002 ,
29426 "polynomials":[      9]
29427 ],
29428 [
29429 "coefficient":      -0.001 ,
29430 "polynomials":[     10]
29431 ],
29432 [
29433 "coefficient":       0.8 ,
29434 "polynomials":[]
29435 ]
29436 ]
```

i (BIT ORDER)

Ci (COMPONENT AMOUNT THAT CAN BE REPRESENTED BY EACH BIT)

CONSTANT TERM (0.8)

EP 4 553 723 A1

## FIG.13

```
"XXXXXX": [
"time_limit_sec": 60,
"num_group": 16,
"gs_level": 50,
"penalty_coef": 1000000,
"num_output_solution": 10

"binary_polynomial":[
"terms":[
[
"coefficient":   0.721764 ,
"polynomials":[          0,          0]
],
[
"coefficient": -71.90723335600001 ,
"polynomials":[          1,          0]
],
[
"coefficient":  -0.764517 ,
"polynomials":[          1,          1]
],
[
"coefficient": -70.66879932719999 ,
"polynomials":[          2,          0]
],
[
"coefficient": -38.9051973913 ,
"polynomials":[          2,          1]
],
[
"coefficient":  -0.764517 ,
"polynomials":[          2,          2]
],
[
"coefficient": 7.896939764100001 ,
"polynomials":[          3,          0]
],
[
"coefficient": 4.37909998785 ,
"polynomials":[          3,          1]
],
[
"coefficient": 4.26519533137 ,
"polynomials":[          3,          2]
```

1000
1002

```
]
]
},
"terms":[
[
"coefficient":              1 ,
"polynomials":[         83]
],
[
"coefficient":              1 ,
"polynomials":[         84]
],
[
"coefficient":              1 ,
"polynomials":[         85]
],
[
"coefficient":              1 ,
"polynomials":[        107]
],
[
"coefficient":             -2 ,
"polynomials":[]
]
]
]
}
]
}
```

1004

EP 4 553 723 A1

## INTERNATIONAL SEARCH REPORT

| International application No. |
| --- |
| **PCT/JP2023/024237** |

### A. CLASSIFICATION OF SUBJECT MATTER

**G06N 99/00**(2019.01)i
FI:   G06N99/00 180

According to International Patent Classification (IPC) or to both national classification and IPC

### B. FIELDS SEARCHED

Minimum documentation searched (classification system followed by classification symbols)
   G06N99/00

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | 関優也ほか. Factorization Machineと イジングマシンを利用した整数変数最適化. 情報処理学会研究報告 量子ソフトウェア(QS). vol. 2022-QS-005, 17 March 2022, pp. 1-7, (IPSJ SIG Technical Report (QS)), non-official translation (SEKI, Yuya et al. Integer Variable Optimization Using Factorization Machine and Ising Machine.) <br> in particular, 2. Black Box Optimization, 5. FMA for Integer Variable Optimization Problem, 6. Application Problem and Results | 1-9 |
| A | TERAYAMA, Kei et al. Black-Box Optimization for Automated Discovery. Accounts of Chemical Research. 2021 54 (6) [online], 2021, 1334-1346, [retrieved on 21 August 2023], Internet: <URL: https://pubs.acs.org/doi/epdf/10.1021/acs.accounts.0c00713> <br> in particular, abstract, fig. 1 | 1-9 |

☐ Further documents are listed in the continuation of Box C.      ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 August 2023** | **29 August 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**EP 4 553 723 A1**

**REFERENCES CITED IN THE DESCRIPTION**

**Patent documents cited in the description**

- JP 2021033768 A